# EUROPÄISCHE PATENTSCHRIFT

(11) **EP 1 287 963 B1**
(45) Veröffentlichungstag und Bekanntmachung des Hinweises auf die Patenterteilung: **08.04.2009**
(21) Anmeldenummer: 02014290.7
(22) Anmeldetag: 27.06.2002
(51) Int. Cl.: B29C 45/17, B29C 45/26, B29D 31/50, B29C 33/30

(54) **Verfahren zum Formwerkzeugspannen sowie Formstation einer Spritzgiessmaschine**
Method of clamping molds and molding station of an injection molding machine
Procédé de serrage des moules et poste de moulage d'une machine à mouler par injection

(30) Priorität: 31.08.2001 DE 10142753
(43) Veröffentlichungstag der Anmeldung: 05.03.2003
(73) Patentinhaber: KLÖCKNER DESMA SCHUHMASCHINEN GmbH, 28832 Achim (DE)
(72) Erfinder: Landwehr, Reinhard, 28832 Achim (DE)
(74) Vertreter: Röther, Peter

(56) Entgegenhaltungen:
- EP-A- 0 413 149
- DE-A- 19 910 190
- FR-A- 1 498 602
- FR-A- 2 581 582
- FR-A- 2 714 866
- FR-A- 2 768 029
- US-A- 3 350 748

## Beschreibung

Die Erfindung betrifft ein Verfahren zum Formwerkzeugspannen in einer Formstation einer Spritzgießmaschine zur Herstellung von Schuhen und/oder Sohlen mit einem aus einem linken und rechten Werkzeugrahmenteil sowie einem Bodenstempel bestehenden Formwerkzeug, welches in einem zweiteiligen Temperierrahmen sowie auf einer den Bodenstempel tragenden Temperierplatte fixiert wird, wobei die Werkzeugrahmenteile in die jeweiligen Temperierrahmenteile eingeschoben werden, und die Werkzeugrahmenteile mit den Temperierrahmenteilen selbsttätig form- und/oder kraftschlüssig verrastet werden, und der Bodenstempel kraftschlüssig auf der Temperierplatte befestigt wird.

Ein derartiges Verfahren ist beispielsweise aus der FR-A 2 714 866 bekannt.

Des weiteren betrifft die Erfindung eine Formstation, in der dieses Verfahren durchgeführt werden kann. Eine derartige Formstation ist ebenfalls aus der oben genannten Druckschrift bekannt.

Spritzgießmaschinen zur Herstellung von Schuhen und/oder Sohlen sind in der Regel als Rundtischanlagen ausgebildet, wobei am Umfang des Rundtisches bis zu 30 Formstationen und mehr angeordnet sind, welche eine nach der anderen an die Plastifizier- und Einspritzeinheit der Maschine herangefahren werden, die den flüssigen bzw. verflüssigten Kunststoff in die in den einzelnen Formstationen gebildeten Formkavitäten einspritzt. Aus den Druckschriften DE 199 10 190 A, der EP-A- 0 413 149, der FR-A- 1 498 602, der FR-A- 2 581 582 sind derartige Maschinen und Formstationen bekannt.

Gerade bei einer derartigen Herstellung von Schuhen müssen die Formwerkzeuge in den Formstationen häufig gewechselt werden, was durch die Vielzahl der Schuhmodelle bzw. der Schuhgrößen bedingt ist.

Bislang wurden die Formwerkzeuge in ihren Einzelteilen separat in der Formstation bzw. im Temperierrahmen bzw. auf der Temperierplatte mittels Werkzeugen von Hand befestigt, was bei der Vielzahl von Formstationen in einer einzigen Maschine naturgemäß mit einem hohen Zeitaufwand verbunden ist.

Der Erfindung liegt daher die Aufgabe zugrunde, ein Verfahren der eingangs genannten Art anzugeben, mit dem der Werkzeugwechsel bzw. das Werkzeugspannen vereinfacht und beschleunigt werden kann.

Die Erfindung löst diese Aufgabe gemäß dem kennzeichnenden Teil des Anspruchs 1 dadurch, dass zunächst das Formwerkzeug aus linkem und rechtem Werkzeugrahmenteil und dem Bodenstempel zu einem Werkzeugpaket -eine einseitig offene Formkavität bildendzusammengestellt und dann über eine Führung in den geschlossenen Temperierrahmen eingeschoben wird, wobei die Werkzeugrahmenteile mit den Temperierrahmenteilen selbsttätig form- und/oder kraftschlüssig verrastet werden und der Bodenstempel kraftschlüssig auf der Temperierplatte befestigt wird.

Bei der Montage des Formwerkzeuges kann somit gänzlich auf Werkzeuge verzichtet werden, da die Befestigung durch die selbsttätige Verrastung erfolgt und das Formwerkzeug als Paket auch mittels automatischer Handhabungsgeräte in die Maschine eingeführt bzw. aus dieser herausgenommen werden kann.

Beim Entnehmen des Formwerkzeuges, welches ausgewechselt werden soll, wird das oben genannte Verfahren in umgekehrter Reihenfolge durchgeführt.

Der Vorteil dieses Verfahrens ist darin zu sehen, dass die Formstation bzw. der Temperierrahmen zum Werkzeugwechsel nicht aufgefahren werden muss, wodurch es u. a. auch zu Wärmeverlusten käme. Diese selbsttätige Verrastung des Formwerkzeugs im Temperierrahmen ersetzt hierbei die mühsame Handmontage der einzelnen Formwerkzeugteile, wie es im Stand der Technik bekannt ist.

Wie erwähnt ist die Formkavität nach dem Einsetzen in den Temperierrahmen einseitig offen. Diese Öffnung wird bei der Schuhproduktion bzw. Sohlenproduktion entweder durch einen sogenannten Verdränger (bei der Herstellung von Sohlen) oder durch einen mit einem Schaft überzogenen Leisten geschlossen, wodurch die Sohle direkt an den Schaft angespritzt werden kann.

Hierzu ist es natürlich notwendig, dass der Temperierrahmen kurz aufgefahren wird, damit die Verdrängerplatte in das Werkzeug eingefahren werden kann.

Gemäß Anspruch 2 wird der Verdränger beim Wiederzusammenfahren des Temperierrahmens durch am Temperierrahmen vorgesehene Spannelemente automatisch verriegelt.

Beim Fertigen der Sohle wird nach dem Füllen der Kavität mit Kunststoff der Bodenstempel nach oben gefahren und die Sohle verpresst. Durch die Maßnahme des Anspruchs 2 wird dabei die Schließkraft innerhalb des Temperierrahmensystems aufgenommen.

Eine für das Verfahren geeignete Formstation wird in den Ansprüchen 3 bis 9 beschrieben.

Die Befestigung bzw. Fixierung des Formwerkzeugs im Temperierrahmen geschieht mittels Rastelementen zwangsläufig; d.h. automatisch.

Hierfür weist die Formstation gemäß Anspruch 4 folgende Merkmale auf:

In der in Einschubrichtung hinteren Anlagefläche jeder Temperierrahmenhälfte ist eine Zentrier- und Haltebuchse vorgesehen, in die ein an der hinteren Anlagefläche der jeweiligen Werkzeugrahmenhälfte angeordneter Zentrierstift einrastbar ist. Darüber hinaus ist im Randbereich der Formwerkzeugeinschuböffnung jeder Temperierrahmenhälfte eine Führungsnut für einen an der jeweiligen Werkzeugrahmenhälfte vorgesehenen, zum Nutquerschnitt komplementären Zapfen angeordnet, wobei sowohl an der Nut als auch am Zapfen miteinander zusammenwirkende, einander komplementäre Rastelemente vorgesehen sind.

Gemäß einer bevorzugten Ausführungsform ist die Führungsnut unterhalb der Einschuböffnung angeordnet und bildet einen zur Einschuböffnung hin offenen Kanal, wobei der zugehörige Zapfen nach unten vorstehend am Werkzeugrahmenteil angeordnet ist. Diese Konstruktion hat den Vorteil fertigungstechnischer Einfachheit.

Um eine gute Führung und einen guten Halt im Temperierrahmen zu gewährleisten, ist gemäß Anspruch 6 der Querschnitt der Führungsnut T-förmig ausgebildet, wobei der senkrechte T-Balken zur Einschuböffnung weist.

Zur form- und kraftschlüssigen Verbindung sieht Anspruch 7 vor, dass seitlich vor dem Nuteingang eine Haltebuchse am Temperierrahmen vorgesehen ist, in die seitlich vor dem Zapfen angeordnetes federndes Druckstück einrastbar ist.

Eine derartige kalottenartige Verrastung ist eine konstruktiv einfache Lösung des Befestigungsproblems.

Gemäß Anspruch 8 ist vorgesehen, dass die Vorspannkraft des Druckstücks einstellbar ist.

Zur Vereinfachung des Einführens des Formwerkzeugpakets in den geschlossenen Temperierrahmen ist gemäß Anspruch 9 vorgesehen, dass zur Zuführung des Werkzeugpakets in die Einschuböffnung des Temperierrahmens ein Führungsblech vorgesehen ist, in dem Ausnehmungen für die an den Werkzeugrahmenhälften vorgesehenen Zapfen sowie für den Befestigungspilz des Bodenstempels vorgesehen sind, welche mit den Führungsnuten sowie einer Aussparung für den Befestigungspilz des Bodenstempels im Temperierrahmen fluchten.

Das auf dem Führungsblech liegende Werkzeugpaket wird dann mittels eines Roboters in die Einschuböffnung hineingeschoben, wonach nach Überwinden der Vorspannkraft des Druckstücks die Fixierung und Zentrierung des Werkzeugs im Temperierrahmen erfolgt.

Zum Herausnehmen des Werkzeugpakets muß zunächst diese Vorspannkraft wieder überwunden werden, wonach die Entnahme des Werkzeugpakets entsprechend einfach erfolgt.

Während die Werkzeugrahmenhälften selbsttätig mit den Temperierrahmenhälften verrastet werden, wird der Befestigungspilz des Bodenstempels mittels eines pneumatischen Bodenstempelspannsystems gehalten. Vor dem Einführen des Werkzeugpakets muß dieses Spannsystem entspannt sein (Spannhub = 2,5 mm). Hat das Werkzeugpaket die Endlage erreicht (sind also die Werkzeugrahmenhälften verrastet), wird das Spannschloß pneumatisch gespannt, so dass der Bodenstempel kraftschlüssig auf der Temperierplatte befestigt ist.

Durch die erfindungsgemäße Ausgestaltung der Formstation lässt sich der Werkzeugwechsel weitestgehend automatisieren.

Die fertig zusammengestellten Formwerkzeugpakete können mittels eines Robotersystems aus dem Werkzeuglager entnommen, auf das Führungsblech gesetzt und in den entsprechenden Temperierrahmen eingeschoben werden, bzw. in umgekehrter Reihenfolge wieder zurückgestellt werden.

Die Erfindung wird im folgenden anhand von Zeichnungen dargestellt und näher erläutert.

Es zeigen:
- Fig. 1:: Temperierrahmenhälfte mit eingeführter Werkzeughälfte und eingesetztem Verdränger,
- Fig. 2:: Vorrichtung gemäß Fig. 1 in anderer Perspektive,
- Fig. 3:: Detail der Rastvorrichtung an der Werkzeugrahmenhälfte,
- Fig. 4:: Darstellung gemäß Fig. 3 in anderer Perspektive,
- Fig. 5:: Temperierrahmenhälfte in perspektivischer Darstellung,
- Fig. 6:: Detailausschnitt aus Fig. 5 in etwas anderer Perspektive

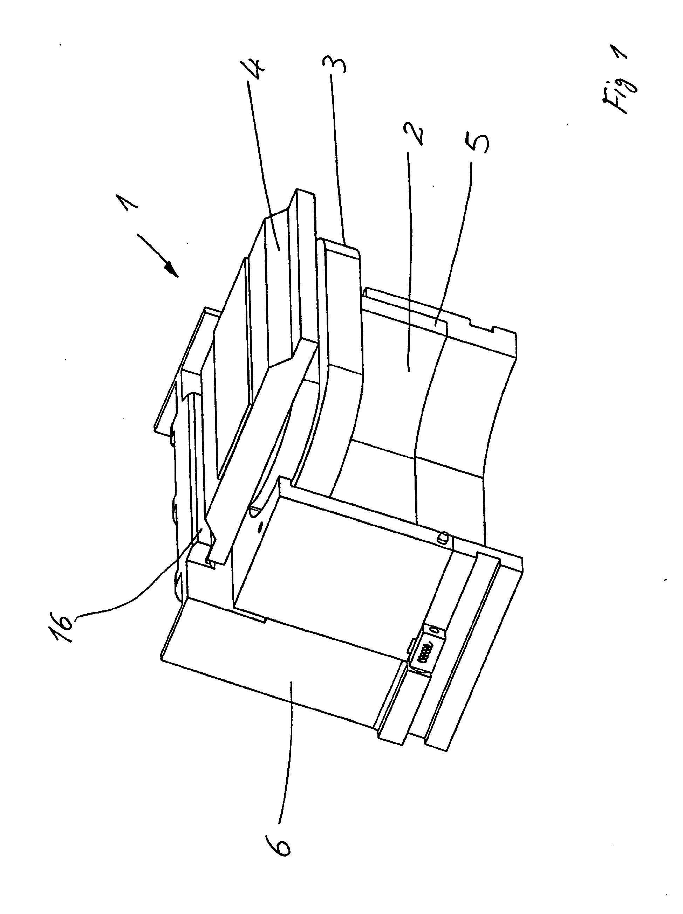

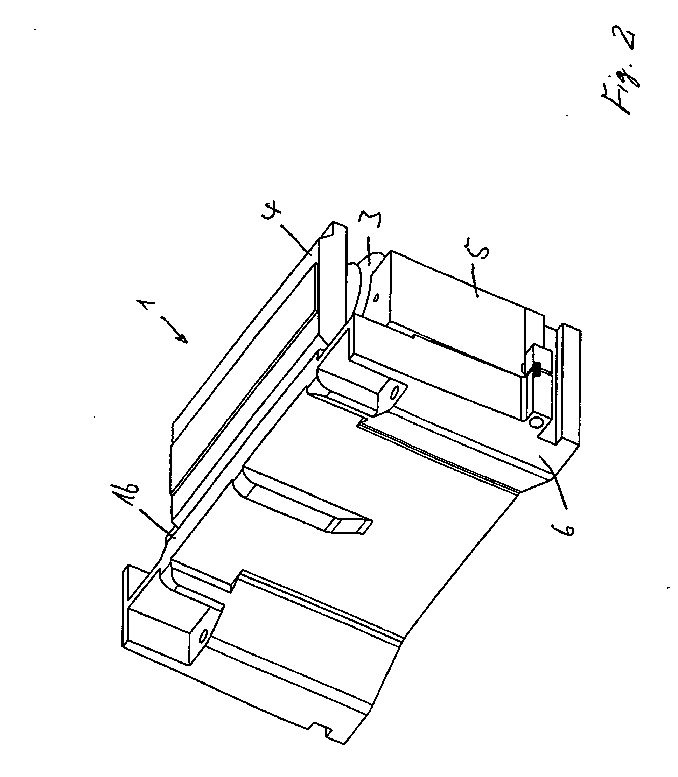

In den Figuren 1 und 2 sind die wesentlichen Teile einer Formstation einer zur Schuhherstellung dienenden Spritzgießmaschine in zusammengebautem Zustand dargestellt, wobei die Formstation allgemein mit dem Bezugszeichen 1 versehen ist.

Aus Übersichtlichkeitsgründen ist jedoch nur eine Hälfte der Formstation 1 dargestellt. Zudem fehlt in der Darstellung der Bodenstempel, der den mit dem Bezugszeichen 2 versehenen Formhohlraum nach unten begrenzt. Demgegenüber dargestellt ist jedoch die obere Formhohlbegrenzung, die in diesem Fall aus einen Verdränger 3 mit der Verdrängerhalteplatte 4 besteht.

Seitlich begrenzt wird der Formhohlraum 2 von den symmetrisch zueinander angeordneten Formwerkzeugrahmenhälften 5.

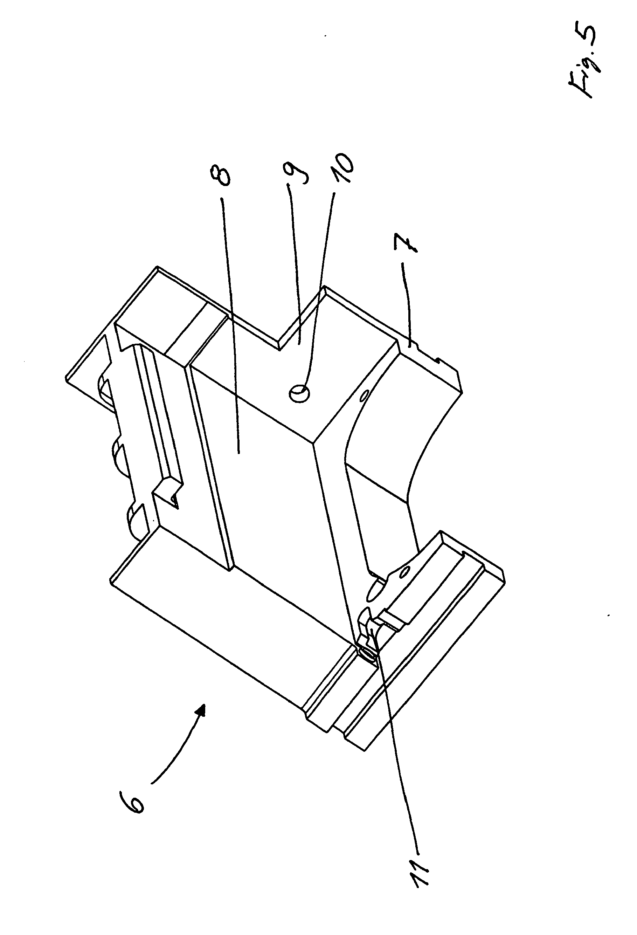

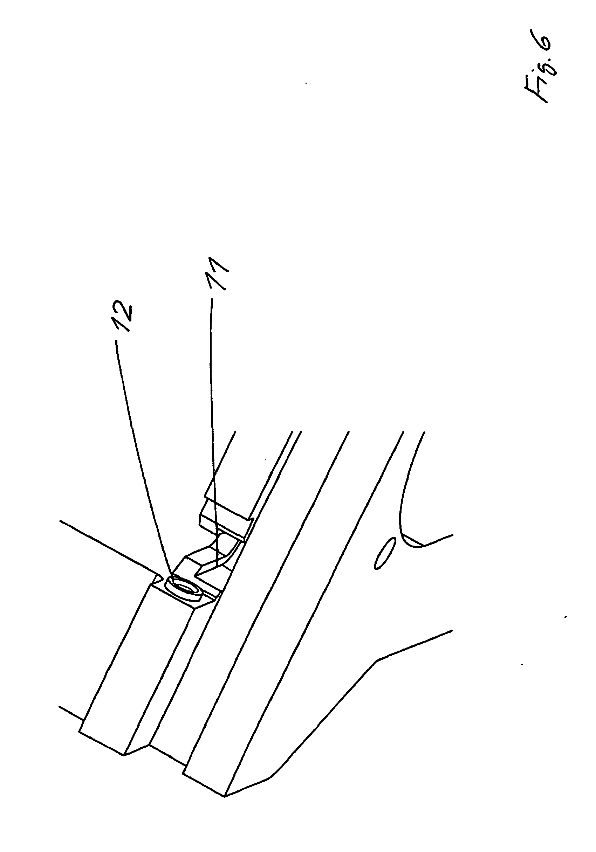

Das aus linker und rechter Formwerkzeughälfte 5 und dem nicht dargestellten Bodenstempel bestehende Werkzeugpaket ist in einen Temperierrahmen 6 eingeschoben, von dem in der Darstellung gemäß Fig. 1 und Fig. 2 lediglich eine Hälfte dargestellt ist. Die Hälften sind jedoch symmetrisch zueinander aufgebaut und werden anhand der Figuren 5 und 6 beschrieben. Jede Temperierrahmenhälfte 6 besteht aus einer C-förmig ausgeschnittenen Basis 7, einer von der Basis 7 aufsteigenden Seitenwand 8 und einer rechtwinklig von dieser Seitenwand 8 verlaufenden Rückwand 9, die als hintere Anlagefläche für die rückseitige Wand der Formwerkzeughälfte 5 dient. In der Rückwand 9 befindet sich eine Zentrier- und Haltebuchse 10, in die beim Einschieben des Formwerkzeugpakets ein an der rückseitigen Wand der jeweiligen Formwerkzeughälfte 5 befindlicher Zentrierstift einrastet. Hierdurch ist die hintere Anlage des Werkzeugrahmens zentriert und kraftschlüssig aufgenommen.

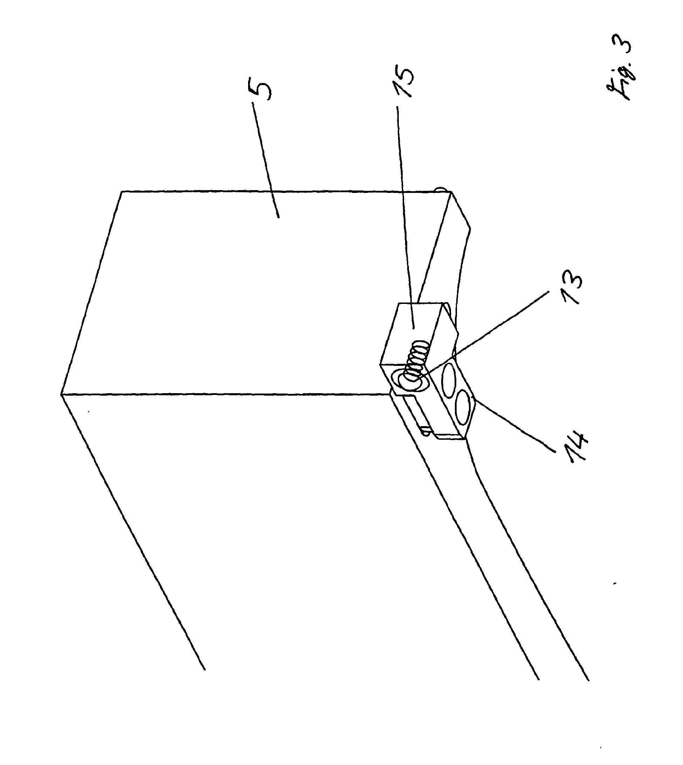

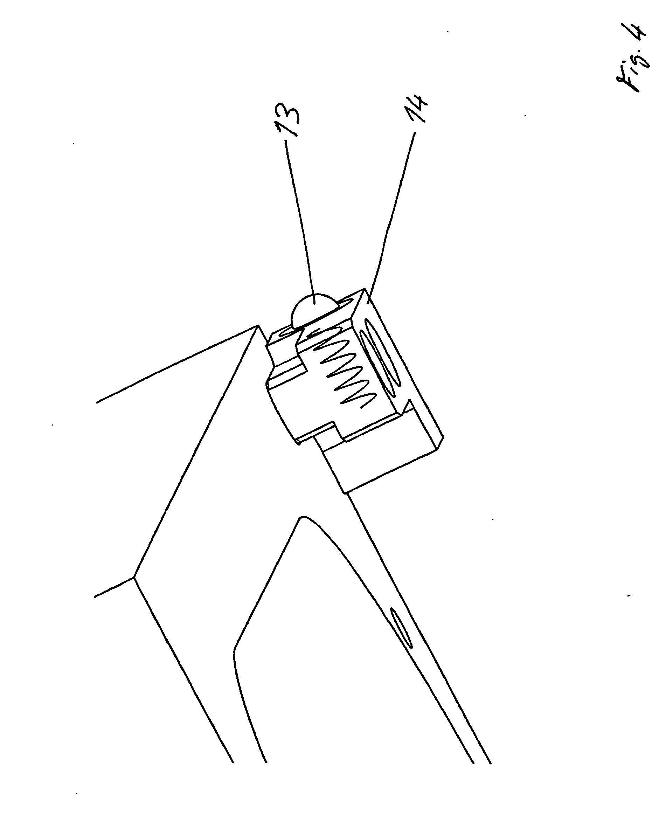

Der nach vorne offene Temperierrahmen 6 weist seitlich neben der Seitenwand 8 im Bereich der Oberkante der Basis 7 eine T-Nut-Führung 11 auf, wobei der T-förmige Querschnitt dieser Nut 11 einen zur Einschuböffnung hin offenen Kanal bildet, wobei der senkrechte T-Balken zum Werkzeug weist. Vor dem Eingang zur T-Nut-Führung 11 befindet sich eine Haltebuchse 12, in die - wie aus den Figuren 3 und 4 zu ersehen - ein kalottenförmiges federnd gelagertes Druckstück 13 einrastbar ist, das einem der T-Nut-Führung 11 komplementären T-Nuten-Stein (Zapfen 14) zugeordnet ist.

Die Endlagenbegrenzung bei der Einschubbewegung erfolgt durch Anlage der rückseitigen Wand der Formwerkzeughälften 5 an der hinteren Anlage 9 des Temperierrahmens.

Sobald das Werkzeugpaket in den Temperierrahmen 6 eingeschoben und eingerastet ist, wobei - wie oben ausgeführt - zum Werkzeugpaket ein in den Zeichnungen nicht dargestellter Bodenstempel gehört, welcher nach dem Einschieben des Werkzeugpakets auf einer für den Bodenstempel vorgesehenen Temperierplatte pneumatisch kraftschlüssig fixiert wird, wird der Temperierrahmen 6 so weit aufgefahren, dass von oben der Verdränger 3 in das Formwerkzeug eingesetzt werden kann. Beim Wiederzusammenfahren des Temperierrahmens 6 fahren an die Temperierrahmenteile 6 angeformte Spanneisen 16 über die seitlichen Ränder der Verdrängerhalteplatte 4, so dass die Schließkraft innerhalb des Temperierrahmensystems aufgenommen wird, wenn bei der Herstellung einer Sohle der Bodenstempel zum Verpressen des Kunststoffmaterials nach oben gefahren wird.

Zum Entnehmen eines Werkzeugpakets aus dem Temperierrahmen 6 wird das Verfahren in umgekehrter Reihenfolge durchgeführt. Das heißt, dass zunächst das Bodenstempelspannsystem entspannt wird, die Kraft des Druckstücks 13 überwunden werden muß, so dass das gesamte Werkzeugpaket aus dem Temperierrahmen 6 herausgezogen werden kann und in diesem zusammengebauten Zustand in das Formwerkzeuglager transportiert werden kann, was automatisiert mittels eines Robotersystems geschieht.

## Patentansprüche

1. Verfahren zum Formwerkzeugspannen in einer Formstation (1) einer Spritzgießmaschine zur Herstellung von und/oder Sohlen mit einem aus einem linken und rechten Werkzeugrahmenteil (5) sowie einem Bodenstempel bestehenden Formwerkzeug, welches in einem zweiteiligen Temperierrahmen (6) sowie auf einer den Bodenstempel tragenden Temperierplatte fixiert wird, wobei die Werkzeugrahmenteile (5) in die jeweiligen Temperierrahmenteile (6) eingeschoben werden, und die Werkzeugrahmenteile (6) mit den Temperierrahmenteilen (6) selbsttätig form- und/oder kraftschlüssig verrastet werden, und der Bodenstempel kraftschlüssig auf der Temperierplatte befestigt wird,
**dadurch gekennzeichnet,**
**dass** zunächst das Formwerkzeug aus linkem und rechtem Werkzeugrahmenteil (5) und dem Bodenstempel zu einem Werkzeugpaket -eine einseitig offene Formkavität (2) bildend - zusammengestellt und dann über eine Führung in den geschlossenen Temperierrahmen (6) eingeschoben wird, wobei die Werkzeugrahmenteile (5) mit den Temperierrahmenteilen (6) selbsttätig form- und/oder kraftschlüssig verrastet werden, und der Bodenstempel kraftschlüssig auf der Temperierplatte befestigt wird.

2. Verfahren nach Anspruch 1,
**dadurch gekennzeichnet,**
**dass** nach dem Einschieben des Werkzeugpakets und dem Verrasten desselben die Hälften des Temperierrahmens (6) auseinander gefahren werden, wonach in das Werkzeug (5) ein Verdränger (3) als abschließende Formkavitätsbegrenzung eingeführt wird, der beim Wiederzusammenfahren des Temperierrahmens (6) durch am Temperierrahmen vorgesehene Spannelemente (16) verriegelt wird.

3. Formstation einer Spritzgießmaschine zur Durchführung des Verfahrens nach Anspruch 1 oder 2 mit einem aus einem linken und rechten Werkzeugrahmenteil (5) und einem Bodenstempel bestehenden Formwerkzeug, welches in einem zweiteiligen Temperierrahmen (6) sowie auf einer den Bodenstempel tragenden Temperierplatte fixierbar ist, wobei die Formwerkzeugteile (5) mittels Rastelementen (10, 11, 12) selbsttätig form- und kraftschlüssig am jeweiligen Temperierrahmenteil (6) festlegbar sind,
**dadurch gekennzeichnet,**
**dass** das Formwerkzeug in zusammengebautem Zustand in den geschlossenen Temperierrahmen (6) einschiebbar bzw. auf die Temperierplatte aufschiebbar und mittels Rastelementen (10, 13, 12) selbsttätig form- und kraftschlüssig festlegbar ist.

4. Formstation nach Anspruch 3,
**dadurch gekennzeichnet,**
**dass** in der in Einschubrichtung hinteren Anlagefläche (9) jeder Temperierrahmenhälfte (6) eine Zentrier- und Haltebuchse (10) vorgesehen ist, in die ein an der hinteren Anlagefläche der jeweiligen Werkzeugrahmenhälfte (5) angeordneter Zentrierstift einrastbar ist und dass im Randbereich der Formwerkzeug-Einschuböffnung jeder Temperierrahmenhälfte (6) eine Führungsnut (11) für einen an der jeweiligen Werkzeugrahmenhälfte (5) vorgesehenen, zum Nutquerschnitt komplementärer Zapfen (14) angeordnet ist und sowohl an der Nut (11) als auch am Zapfen (14) miteinander zusammenwirkende, einander komplementäre Rastelemente (12,13) vorgesehen sind.

5. Formstation nach Anspruch 4,
**dadurch gekennzeichnet,**
**dass** die Führungsnut (11) unterhalb der Einschuböffnung angeordnet ist und einen zur Einschuböffnung hin offenen Kanal bildet und der zugehörige Zapfen (14) nach unten vorstehend am Werkzeugrahmenteil (5) angeordnet ist.

6. Formstation nach Anspruch 5,
**dadurch gekennzeichnet,**
**dass** der Querschnitt der Führungsnut (11) T-förmig ausgebildet ist, wobei der senkrechte T-Balken zur Einschuböffnung weist.

7. Formstation nach einem der Ansprüche 3 bis 6,
**dadurch gekennzeichnet,**
**dass** seitlich vor dem Nuteingang eine Haltebuchse (12) am Temperierrahmen (6) vorgesehen ist, in die ein seitlich vor dem Zapfen (14) angeordnetes federndes Druckstück (13) einrastbar ist.

8. Formstation nach Anspruch 7,
**dadurch gekennzeichnet,**
**dass** die Vorspannkraft des Druckstücks (13) einstellbar ist.

9. Formstation nach einem der Ansprüche 3 bis 8,
**dadurch gekennzeichnet,**
**dass** zur Zuführung des Werkzeugpakets in die Einschuböffnung des Temperierrahmens (6) ein Führungsblech vorgesehen ist, in dem Ausnehmungen für die an den Werkzeugrahmenhälften (5) vorgesehenen Zapfen (14) sowie für den Befestigungspilz des Bodenstempels vorgesehen sind, welche mit den Führungsnuten (11) sowie einer Aussparung für den Befestigungspilz des Bodenstempels im Temperierrahmen (6) fluchten.

## Claims

1. Method for clamping a moulding tool in a moulding station (1) of an injection moulding machine for producing shoes and/or soles with a moulding tool consisting of a left and right tool frame part (5) and a base punch, wherein the moulding tool is secured to a two-part heating frame (6) and on a heating plate supporting the base punch, whereby the tool frame parts (5) are inserted into the respective heating frame parts (6) and the tool frame parts (5) with the heating frame parts (6) are automatically latched positively or semi-positively,
**characterised in that,**
firstly, the moulding tool is assembled from the left and right tool frame parts (5) and the base punch to form a tool assembly - forming a mould cavity (2) open on one side, following which it is inserted by means of a guide into the closed heating frame (6), whereby the tool frame parts (5) are latched automatically with the heating frame parts (6) positively or semi-positively, and the base punch is secured semi-positively on the heating plate.

2. Method in accordance with claim 1,
**characterised in that,**
after the tool assembly has been inserted and latched, the halves of the heating frame (6) are moved apart, after which a displacer (3) is inserted into the tool (5) to close off the moulding cavity and is locked in place by clamping elements (16), provided on the heating frame (6), when the heating frame (6) closes once more.

3. Moulding station of an injection moulding machine to perform the method according to claim 1 or 2 with a moulding tool consisting of a left and right tool frame part (5) and a base punch, wherein the moulding tool is secured in a two-part heating frame (6) and on a heating plate supporting the base punch, whereby the moulding tool parts (5) can be located in position automatically by means of clamping elements (10, 11, 12) positively and semi-positively to the respective heating frame part (6),
**characterised in that,**
the moulding tool in its assembled state can be inserted into the closed heating frame (6) or, respectively, moved on to the heating plate, and can be located in position automatically by means of clamping elements (10, 11, 12) positively and semi-positively.

4. Moulding station in accordance with claim 3,
**characterised in that,**
a centring and retaining sleeve (10) is provided in the rear locating face (9) in the insertion direction of each heating frame part (6), into which sleeve a centring pin arranged on the rear locating face of the respective tool frame half (5) can be latched, and that, in the edge region of the moulding tool insertion opening of each heating frame half (6), a guide groove (11) is arranged for a bar (14), provided on the respective tool frame half (5), and which is complementary to the cross section of the groove, and, both on the groove (11) as well as on the bar (14), latching elements (12, 13) are provided, complementary to each other and engaging with each other.

5. Moulding station in accordance with claim 4,
**characterised in that,**
the guide groove (11) is arranged under the insertion opening and forms an open channel in the direction of the insertion opening, and the associated bar (14) is arranged underneath and projects on the tool frame part (5).

6. Moulding station in accordance with claim 5,
**characterised in that,**
the cross section of the guide groove (11) is T-shaped whereby the vertical T-bar points towards the insertion opening.

7. Moulding station in accordance with one of claims 3 to 6,
**characterised in that,**
a retaining sleeve (12) is provided on the heating frame (6) laterally in front of the groove opening, into which sleeve a spring-loaded thrust element (13) arranged laterally at the front of the bar (14) can be latched.

8. Moulding station in accordance with claim 7,
**characterised in that,**
the clamping force of the thrust element (13) is adjustable.

9. Moulding station in accordance with one of claims 3 to 8,
**characterised in that,**
a guide plate is provided in order to guide the tool assembly into the insertion opening of the heating frame (6), wherein the guide plate is provided with recesses for the bars (14) located on the tool frame halves (5) as well as for the mushroom-head elements securing the base punch, which align with the guide grooves (11) as well as a recess for the mushroom-head elements securing the base punch in the heating frame (6).

## Revendications

1. Procédé de serrage de moule dans un poste de moulage (1) d'une machine à mouler par injection pour la fabrication de chaussures et/ou de semelles avec un moule constitué de parties de moule gauche et droite (5) ainsi que d'un poinçon inférieur, lequel moule est fixé dans un cadre de maintien en température (6) en deux parties ainsi que sur une plaque de maintien en température portant le poinçon inférieur, les parties de moule (5) étant introduites dans les parties de châssis de maintien en température (6) respectives, et les parties de moule (6) étant accrochés automatiquement par complémentarité de formes et/ou à force avec les parties de châssis de maintien en température (6), et le poinçon inférieur étant fixé à force sur la plaque de maintien en température, **caractérisé en ce que** le moule, constitué des parties de moule gauche et droite (5) et du poinçon inférieur, est assemblé en un paquet de moule - formant une cavité de moule (2) ouverte d'un côté - puis introduit, par un guide, dans le châssis de maintien en température (6) fermé, les parties de moule (5) étant accrochées automatiquement par complémentarité de formes et/ou à force avec les parties de châssis de maintien en température (6), et le poinçon inférieur étant fixé à force sur la plaque de maintien en température.

2. Procédé selon la revendication 1, **caractérisé en ce qu'**après introduction du paquet de moule et l'accrochage de celui-ci, les moitiés du châssis de maintien en température (6) sont écartées l'une de l'autre, après quoi est introduit dans le moule (5) un organe déplaceur (3) servant à délimiter en la fermant la cavité de moule, lequel est verrouillé par des éléments de serrage (16) prévus sur le châssis de maintien en température, lors de la réunion du châssis de maintien en température (6).

3. Poste de moulage d'une machine à mouler par injection pour la mise en oeuvre du procédé selon l'une quelconque des revendications 1 ou 2 avec un moule constitué de parties de moule gauche et droite (5) et d'un poinçon inférieur, lequel moule peut être fixé dans un châssis de maintien en température (6) en deux parties ainsi que sur une plaque de maintien en température portant le poinçon inférieur, les parties de moule (5) pouvant être fixées automatiquement par complémentarité de formes et à force, au moyen d'éléments d'accrochage (10, 11, 12), sur les parties de châssis de maintien en température (6) respectives, **caractérisé en ce que** le moule à l'état assemblé peut être introduit dans le châssis de maintien en température (6) fermé ou enfilé sur la plaque de maintien en température et peut être fixé automatiquement par complémentarité de formes et à force au moyen d'éléments d'accrochage (10, 13, 12).

4. Poste de moulage selon la revendication 3, **caractérisé en ce que** dans la surface de contact (9), arrière dans le sens d'introduction, de chaque moitié de châssis de maintien en température (6), il est prévu une douille de centrage et de maintien (10) dans laquelle peut s'accrocher un doigt de centrage disposé sur la surface de contact arrière de la moitié de moule (5) respective, et **en ce que** dans la zone de bordure de l'ouverture d'introduction du moule de chaque moitié de châssis de maintien en température (6), est réalisée une rainure de guidage (11) pour une languette (14) complémentaire à la section de la rainure et prévue sur la moitié de moule (5) respective, et sur la rainure (11) comme sur la languette (14) sont prévus des éléments d'accrochage (12, 13) complémentaires l'un de l'autre et coopérant ensemble.

5. Poste de moulage selon la revendication 4, **caractérisé en ce que** la rainure de guidage (11) est disposée au-dessous de l'ouverture d'introduction et forme un canal ouvert vers l'ouverture d'introduction, et la languette (14) correspondante est disposée de manière à dépasser vers le bas sur la partie de cadre de moule (5).

6. Poste de moulage selon la revendication 5, **caractérisé en ce que** la section de la rainure de guidage (11) est réalisée en forme de T, la barre verticale du T étant dirigée vers l'ouverture d'introduction.

7. Poste de moulage selon l'une quelconque des revendications 3 à 6, **caractérisé en ce que** sur le côté, devant l'entrée de rainure, il est prévu une douille de maintien (12) sur le châssis de maintien en température (6), dans laquelle peut s'accrocher une pièce de compression (13) formant ressort, disposée sur le côté devant la languette (14).

8. Poste de moulage selon la revendication 7, **caractérisé en ce que** la force de précontrainte de la pièce de compression (13) est réglable.

9. Poste de moulage selon l'une quelconque des revendications 3 à 8, **caractérisé en ce que** pour l'amenée du paquet de moule dans l'ouverture d'introduction du châssis de maintien en température (6), il est prévu une tôle de guidage dans laquelle sont prévus des évidements pour la languette (14) prévue sur les moitiés de moule (5) ainsi que pour le champignon de fixation du poinçon inférieur, lesquels évidements sont alignés avec les rainures de guidage (11) ainsi qu'avec une découpe pour le champignon de fixation du poinçon inférieur dans le châssis de maintien en température (6).
